# EUROPEAN PATENT APPLICATION

(11) **EP 4 801 070 A1**
(43) Date of publication of application: **02.09.2026**
(21) Application number: 25161170.3
(22) Date of filing: 28.02.2025
(51) Int. Cl.: H04W 4/029, G06Q 10/08, G06Q 10/087

(54) **A METHOD OF LOCATING A ROBOT**

(71) Applicant: AutoStore Technology AS, 5578 Nedre Vats (NO)
(72) Inventor: STOPLE, Eirik, 5578 Nedre Vats (NO)
(74) Representative: Kilburn & Strode LLP

(57) **Abstract**

The disclosure relates to a method of locating a lost robot on an automated storage and retrieval system, the method comprising transmitting and receiving at least one signal between the lost robot and one or more finding robots located at a plurality of finding locations, measuring a strength of the at least one signal received, associating a value for the strength of the at least one signal received with each of the plurality of finding locations respectively, and determining the location of the lost robot based on the respective values for strength of the at least one signal.

## Description

### TECHNICAL FIELD

The disclosure relates to a method of locating a robot. More particularly, it relates to a method of locating a lost robot in an automated storage and retrieval system..

### BACKGROUND

Traditional storage solutions typically involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In such automated storage and retrieval systems, the container-handling vehicles may communicate their location to a control system provided to optimise route planning. However, the container-handling vehicles may become compromised, and consequently their location becomes unknown. Before the system can continue with optimised route planning, the location of the container-handling vehicles must be found.

Previously known methods of dealing with lost robots (container-handling vehicles) can be costly and inefficient, resulting in more downtime to resolve while adding extra complications to the automated storage and retrieval systems. Consequently, a more efficient method of locating a lost robot would be beneficial to the operation of the storage and retrieval system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a plan view of a storage system upon which the disclosed methods can be carried out;
Fig. 6 shows a flowchart of an exemplary method of locating a robotic container handling vehicle used in the system of Fig. 1.

### DETAILED DESCRIPTION

In overview, the disclosure relates to a method of finding a lost robot on an automated storage and retrieval system. The automated storage and retrieval system comprises a storage grid, and a rail system arranged on top of the storage grid. The method comprises transmitting and receiving signals between a lost robot and at least one finding robot at a plurality of finding locations. A plurality of signal strengths are measured and each of them associated with a respective finding location of the plurality of finding locations. Using the plurality of signal strengths, the location of the lost robot is determined. In this sense, the method provides a simple and inexpensive way of determining the location of a lost robot on an automated storage and retrieval system. When compared with other methods of locating a robot, the present alternative method can be incorporated in any automated storage and retrieval system, and does not require installation of any other features. By locating a lost robot, the overall efficiency of the automated storage and retrieval system may be improved. In more detail, lost robots existing in an automated storage and retrieval system may be a cause of suboptimal routing, and potentially collisions with other functioning robots. By finding lost robots as fast as possible, they can subsequently be recalibrated and/or retrieved quicker, thereby improving the efficiency of the system.

In some examples, the lost robot may have been travelling to a known location before it became lost, and thus its location is known in a first axis of the rail system. Moreover, the location of the lost robot may be estimated in a second axis based upon at least one of a mass of the lost robot, a velocity of the lost robot before it became lost, a model of the lost robot, and/or a location of the lost robot before it became lost. Using this estimated location, a control system of the automated storage and retrieval system may create an isolation area around the lost robot thereby preventing other robots operating upon the rail system from colliding with the lost robot. In some examples, once the location of the lost robot has been determined, the size of this isolation area may be decreased, thereby increasing the size of the operable parts of the rail system. This increases the efficiency of the automated storage and retrieval system by increasing the operable part of the grid for the functioning robots to operate.

In some examples, the signals transmitted and received between the lost robot and the at least one finding robot may be communicated across a plurality of channels. Moreover, each channel of the plurality of channels may comprise a transmission different frequency. Many robots may be operating on the grid while the methods of the present disclosure are being carried out, and thus there may exist signal noise upon the rail system. Communicating across a plurality of channels each with different transmission frequencies may help to negate the effects of signal noise, thereby providing a more accurate determination of the location of the lost robot. More accurate location determination will enable a more accurate isolation area, thereby increasing the efficiency of the automated storage and retrieval system by virtue of the effects discussed above.

In some examples, there are a group of robots operating upon the rail system, and the one or more finding robots are selected from the group of robots. Further, the one or more finding robots selected from the group may have been the closest in proximity to the lost robot at the moment it became lost. In essence, the finding robots may be any normal robot operating on the grid, rather than a robot specialised in finding lost robots. Because of this, no other components or specific installations need to happen within the automated storage and retrieval system, thereby providing an inexpensive and fast way of locating a lost robot. In some examples, the one or more finding robots were carrying out a normal storage and retrieval task before attempting to locate the lost robot. In a further example, after the location of the lost robot has been determined, the continue with the storage and retrieval task which was postponed before locating the lost robot.

In some examples, the plurality of finding locations may be determined sequentially. That is, a first location is determined, a second location is determined, and then each subsequent location is determined. Certain logic may be used to determine each successive location. In more detail, this may comprise selecting a first finding location, measuring a first signal strength associated with the first finding location, moving to a second finding location, measuring a second signal strength associated with the second finding location, comparing the two signal strengths, and if the second signal strength is higher than the first signal strength, continuing to move in the same direction as it moved from the first finding location to the second finding location. If the signal strength at the second finding location is found to be low-er than at the first finding location, the finding robot may move in a direction back towards the first finding location. This may be extended up to any number of finding locations. In doing this, the one or more finding robots may get closer and closer to the lost robot. Being closer to the robot increases the signal strength measured, thereby increasing the signal to noise ratio, and increasing the accuracy of the location of the lost robot.

### Automated storage and retrieval system overview

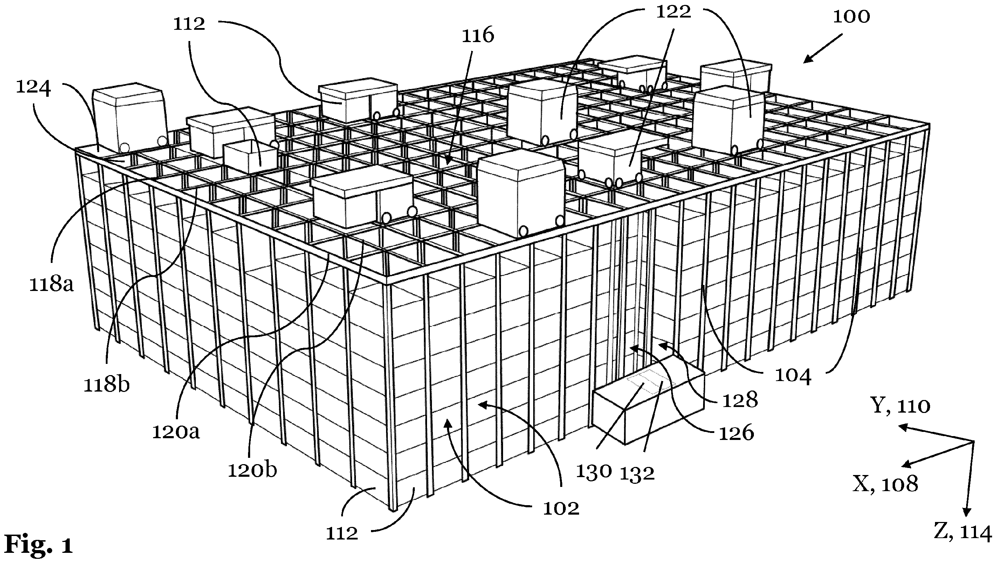

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

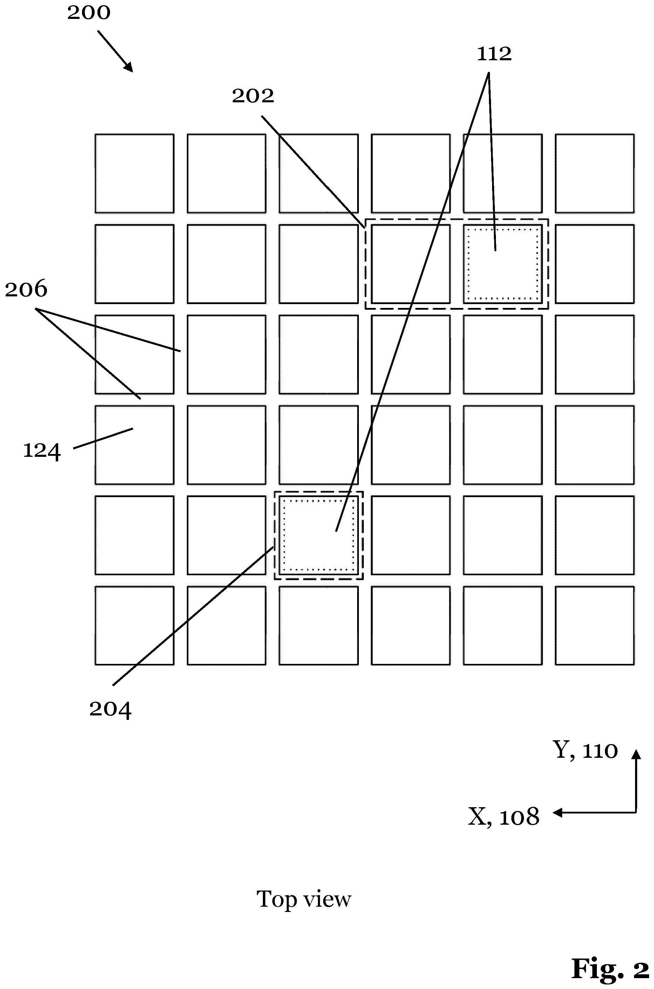

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

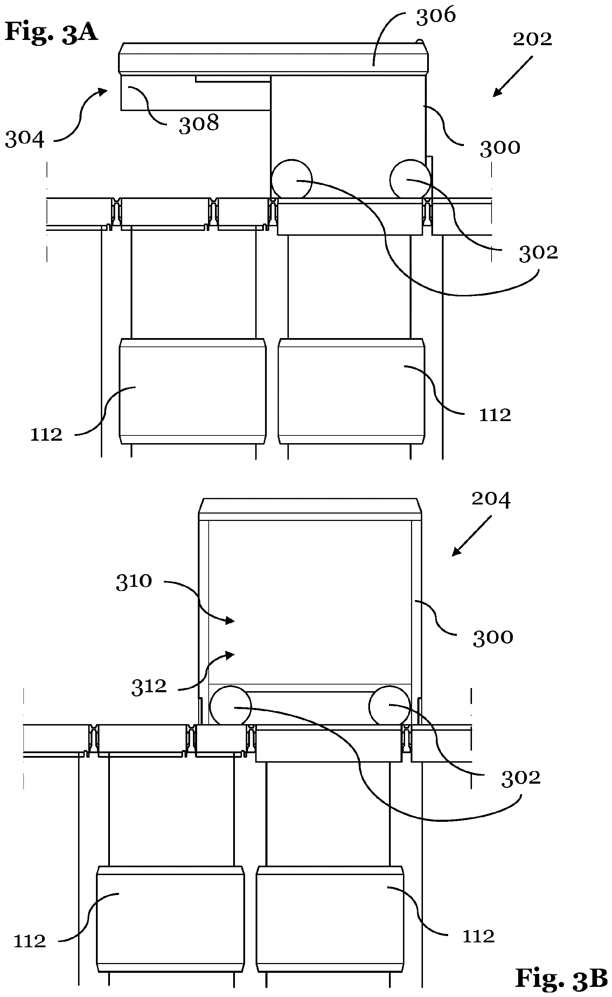

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

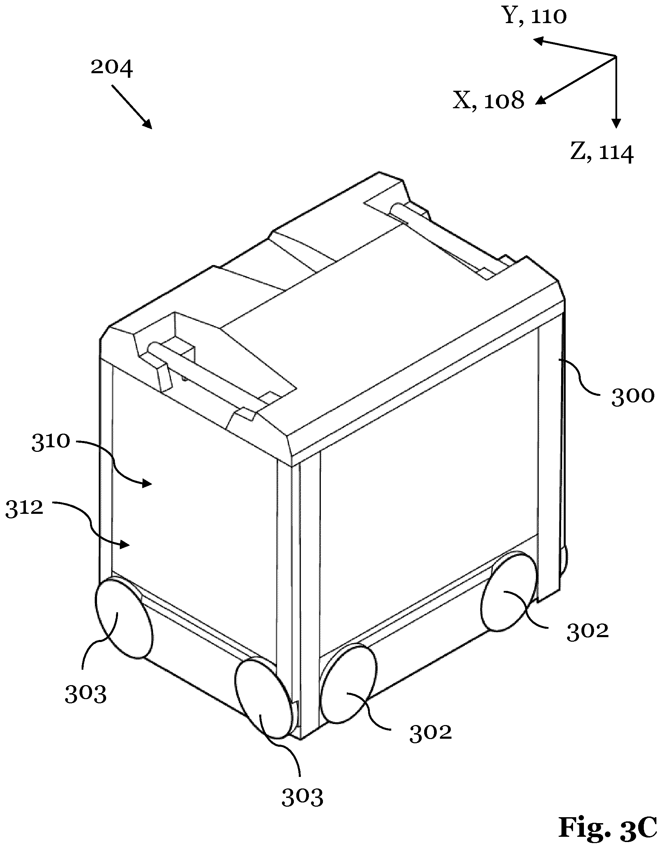

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

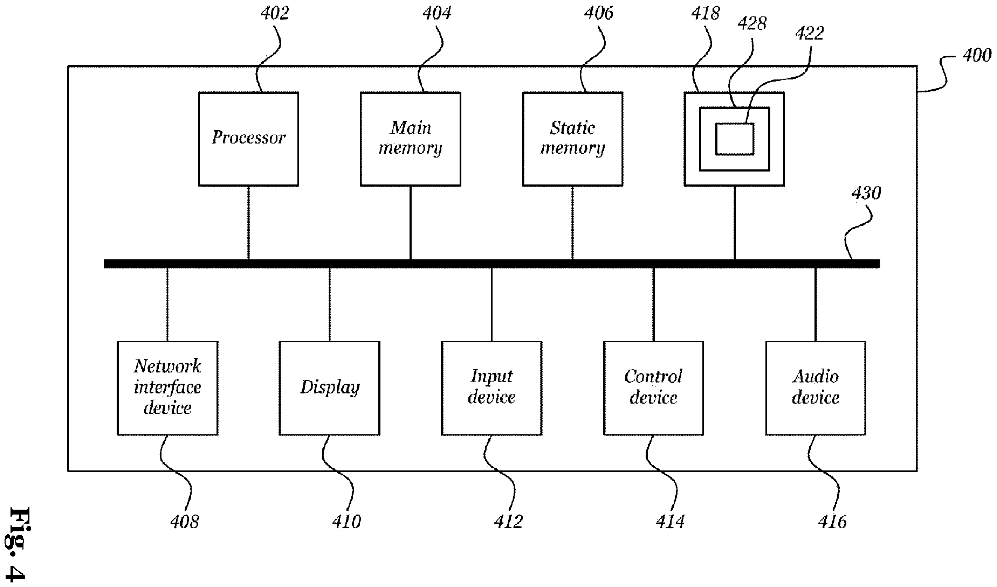

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Determining unknown position

Existing approaches to monitoring the location of robotic container-handling vehicles (hereinafter referred to as robots) can consist of initially placing the robot at a known location. Instructions can then be sent to the robot to travel to a new location. For example, instructions can be sent to the robot (by the control system, for example) to move a known distance in one axis, for example the x-axis and subsequently a known distance in another axis, for example the y-axis . These known distances can be a multiple of grid cells in the case of the grid of Figs. 1 and 2. The control system may then assume that the robot is at the location that it was instructed to go to. However, complications can arise if the robot loses track of its location. This may occur at any point on its journey while executing the instructions, for example, the robot may lose power or derail while in transit. Losing power or derailing while in transit may cause the robot to roll an unknown distance. This creates uncertainty in the location of the robot on the grid which can lead to system inefficiencies. For example, certain parts of the grid may need to be isolated to prevent properly functioning robots from entering in order to stop collisions with the lost robot. It will be appreciated that this causes system inefficiencies as the isolated part of the grid may contain bins which are inaccessible to properly functioning robots until the lost robot is located and either rendered operable or removed from the grid.

A method of locating a lost robot is provided in the present disclosure to increase the efficiency of an automated storage and retrieval system.

The method of locating a lost robot can be used for locating a lost robot in the automated storage and retrieval system. The provided method of locating a lost robot can be used as a primary method of locating a robot in an automated storage and retrieval system. Alternatively it may be used alongside other known methods of locating a lost robot in an automated storage and retrieval system. The method of locating a lost robot described herein may be faster than previously known methods, and obviate the need for any equipment outside of what is already used in the normal operation of the automated storage and retrieval system. The isolated part of the grid may be drastically narrowed once the location of the lost robot has been determined thereby decreasing the inoperable part of the grid and increasing the efficiency of the automated storage and retrieval system.

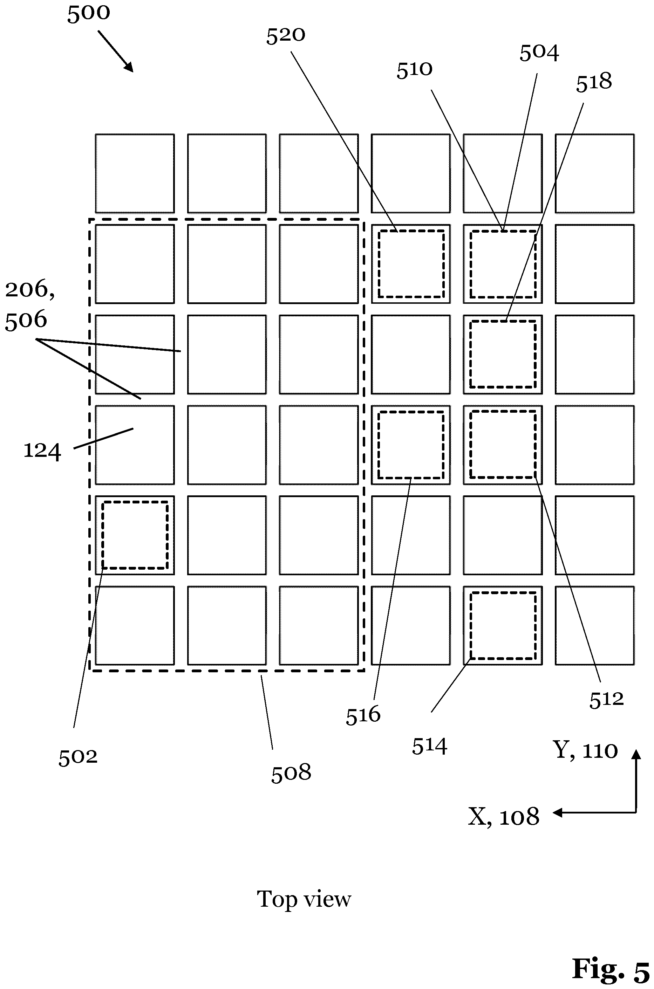

Fig. 5 shows a top view of the X-Y configuration 500 of the rail system 116 of Fig. 1 and Fig. 2 in which the method of locating a lost robot 502 of the present disclosure may be carried out. The storage system comprises the , a lost robot 502 and a finding robot 504 located on rails 506. As described in relation to Fig. 2, the finding robot 504 is permitted to travel in the X and Y directions 108 and 110.

The lost robot 502 may have been travelling to a known location before it became lost on the grid 100. For any reason (for example loss of power, loss of controlling signal, derailing or other mechanical breakdown), the lost robot 502 lost track of its location, and thus its location is now uncertain. To prevent any collisions with the lost robot 502, the control system may isolate a part of the grid 508 (hereinafter referred to as the isolation area). Since the control system may have knowledge of the instructions given to the lost robot 502 before its location became uncertain, the control system may isolate an area of the grid 100 in which it may be confident that the lost robot 502 is located. The control system may use many parameters to estimate the position and size of the isolation area 508. These parameters may include but are in no way limited to: the intended destination of the lost robot 502, the velocity of the lost robot 502, the mass of the lost robot 502, the model of the lost robot 502, and/or the last known location of the lost robot 502 etc. The isolation area 508 defines a part of the grid in which no other robots are permitted to enter while the isolation area 508 exists.

Robots on the grid (including the finding robot 504 and the lost robot 502) may each have an antenna configured to communicate with at least the other robots on the grid and the control system. That is, the antennae are configured to transmit and receive signals. Alternatively, any other suitable method of transmitting and receiving signals between multiple robots and the control system may be used. For example, it is possible to transmit signals via a communications module without an antenna.

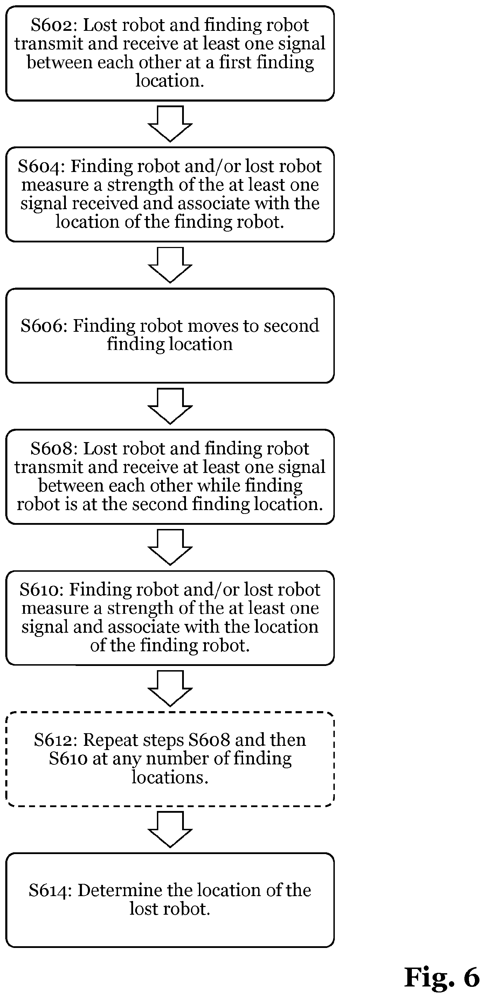

Fig. 6 is a flowchart of an exemplary method of locating a lost robot 502 according to the above description.

The method 600 begins at step 602 wherein the lost robot 502 and the finding robot 504 transmit and receive at least one signal between each other while the finding robot 504 is at a first finding location 510. At step 604, the finding robot 504 and/or the lost robot 502 measure a strength of the at least one signal received.. In some examples, in step 602, the at least one signal is sent from the finding robot 504 to the lost robot 502, and the lost robot 502 measures the strength of the at least one signal received in step 604 and reports the strength of the signal either to the control system or back to the finding robot 504. In some examples, upon receiving a signal from the finding robot 504 in step 602, the lost robot 502 sends a signal back to the finding robot 504, and the strength of the signal received from the lost robot 502 is measured by the finding robot 504 in step 604. In another example, the lost robot 502 may send a signal to the finding robot 504 in step 602 without first receiving a signal from the finding robot 504 and the finding robot 504 measures the strength of this signal in step 604.

The strength of the signal received at either robot is associated with the location of the finding robot 504 (the first finding location 510 in this case). The strength of the at least one signal received may be measured by using a received signal strength indicator (RSSI), or any other suitable means of measuring a received signal strength.

At step 606 the finding robot 504 then moves to a second finding location 512. At step 608, the lost robot 502 and the finding robot 504 transmit and receive at least one signal between each other while the finding robot 504 is at the second finding location 512 in the same manner as step 602. At step 610, the finding robot 504 and/or the lost robot 502 measure a strength of the at least one signal received by either the finding robot 504 or the lost robot 502 in the same manner as step 604. Again, the strength of the at least one signal received is associated with the location of the finding robot 504 (the second finding location 512 in this case).

At step 612, the finding robot 504 may repeat the above steps 608 and 610 at any number of finding locations until an adequate number of finding locations have a signal strength associated therewith. This may be any number of locations of 2 or more. It will be appreciated that the more finding locations that are probed by the finding robot 504, the more accurate the determination of the location of the lost robot 502 will be.

Once an adequate amount of finding locations have been probed, the location of the lost robot 502 is determined at step 614. For example, once a plurality of locations has been probed, a plurality of signal strengths are associated therewith respectively. The plurality of signal strengths can be translated into distances by any appropriate mathematical law. For example, this law could be a Power ~ 1/r² law. In other words, each signal strength of the plurality of signal strengths may be related to a distance, r, creating a plurality of distances. Relating each of the plurality of distances to each of the plurality of locations respectively makes it possible to determine the location of the lost robot 502. For example, given an adequate number of finding locations, each of the plurality of distances may be mapped out onto the grid beginning from each of the plurality of locations respectively. There will be a unique location on the grid in which each distance of the plurality of distances reach to - this is the location of the lost robot 502. This unique location may be determined by creating a circle for each of the plurality of finding locations with the radius being the distance related to the finding location, and the centre being the finding location. The intersection of each of the circles is the location of the lost robot 502. The adequate number of finding locations may be a number of finding locations required to narrow the location of the lost robot 502 down to a certain number of storage cells on the grid. This certain number of storage cells may be a predefined parameter and may be any number of storage cells. For example, this may preferably be 1 storage cell for the most accurate determination of lost robot 502 location.

Logic may be used in determining each consecutive finding location of the plurality of finding locations. For example if the signal strength associated with the second finding location 512 is found to be higher than the signal strength associated with the first finding location 510, when determining the third finding location 514, the finding robot 504 moves in the same direction as moving from the first finding location 510 to the second finding location 512. This also applies to the reverse situation wherein signal strength associated with the second finding location 512 is found to be lower than the signal strength associated with the first finding location 510. This would cause the finding robot 504 to move back towards the first finding location 510, without the destination being identical to the first finding location 510. This may be repeated until any number of finding locations have been probed.

Alternatively, the finding robot 504 may go left, right, forwards, or backwards (in the x and y axes) at any location on the grid to determine the next finding location of the plurality of finding locations based on the signal strength at each finding location. For example, if a finding robot 504 was at position 520 of Fig. 5 when a signal strength was determined, and was subsequently at position 512 when a further signal strength was determined, a next location could be either location 516 or 518 as both positions are moving towards position 520 from position 512.

Each finding location of the rail system on top of the storage grid may be associated with a respective column 102 of Fig. 1, or opening 124. For example, each finding location of the plurality of finding locations is located directly above a column 102. It will be understood that a finding location can be located between columns 102, spanning across multiple columns 102.

An automated storage and retrieval system may comprise many nearby robots operating on the grid as shown in Fig. 1. This can introduce noise, which can introduce a complication with the aforementioned method of locating a lost robot 502. To overcome this complication, at each of the plurality of finding locations, a plurality of signals may be sent to the lost robot 502. For example, at the first finding location, the finding robot 504 may send a plurality of signals to the lost robot 502. The lost robot 502 measures a strength of the plurality of signals received at the location of the lost robot 502. The strength of the plurality of signals received is associated with the location at which the signals were sent from by the finding robot 504. This example can be applied to each finding location of the plurality of finding locations, and is not limited to the first finding location.

Using a plurality of signals for each of the plurality of finding locations allows the lost robot 502 to average the strength of the plurality of signals received into a single value to be associated with each finding location. This increases the signal to noise ratio of the single value to be associated with each finding location, and therefore gives a more accurate determination of the location of the lost robot 502 once the above steps have been carried out. The plurality of signals sent to the lost robot 502 at each finding location of the plurality of finding locations may also each be sent on a different channel at a different frequency. Additionally or alternatively, there may be many signals sent from each channel wherein each channel is at a different frequency. This also reduces the negative impact of signal noise upon the grid. Alternatively, the lost robot 502 may send a plurality of signals to the finding robot 504 and the finding robot 504 may measure a strength of the plurality of signals received from the lost robot 502 at the finding location of the finding robot 504, with the average signal strength being associated with each finding location as above. Additionally or alternatively, the lost robot 502 and/or the finding robot 504 may send the plurality of signals to the control system after either the lost robot 502 or finding robot 504 has received and measured the plurality of signals. The control system may then average the signal strength being associated with each finding location as above.

It will be appreciated that the strength of the signals received by the lost robot 502 will be affected by the height of its antenna (or communications module) on the grid (Z-axis in Fig.1). If the lost robot 502 has become derailed, the height of the antenna may not be in the expected location. The finding robot 504 may vary the height of its antenna at each finding location of the plurality of finding locations to find the height of the antenna of the lost robot 502. For example, at the first finding location, the finding robot 504 may send a signal with the antenna at a first height. The lost robot 502 measures a signal strength associated with the first finding location and a first height. The finding robot 504 may send a second signal from the first finding location with the antenna at a second height. This process can be repeated for any number of antenna heights, and also at each finding location of the plurality of finding locations. It will be appreciated that the antenna height associated with the highest signal strength at each location will be reflected in the height of the antenna of the lost robot 502. Knowing the expected height of the antenna of the lost robot 502 enables the determination of whether the lost robot 502 has derailed or not. This also applies if a signal is sent from the lost robot 502 to the finding robot 504 for measuring of the signal strength. Alternatively, the height of the antenna may be determined after the location of the lost robot 502 has been determined. In other words, the location of the lost robot 502 may be found first, and then different heights are probed to find the height of the antenna to check for derailment of the robot. In this example, the height does not need to be probed at each finding location, but rather only the final finding location.

To reiterate, either the lost robot 502 or the finding robot 504 can measure a strength of the signal and associate the strength of the signal with each finding location. The lost robot 502 may measure a strength of a signal received from a finding robot 504 associated with each location and/or the finding robot 504 may measure a strength of a signal received from a lost robot 502 associated with each location. These strength values may then be averaged before determining the position of the lost robot 502.

Additionally or alternatively, the finding robot 504 and/or the lost robot 502 may communicate the values for the signal strength and the respective locations to the control system in any of the examples described which may determine the location of the lost robot 502. The signal strength associated with each finding location may be transmitted to the control system after each measurement is taken, or alternatively after all signals have been measured.

The methods described herein may also be carried out with more than one finding robot 504. A plurality of finding robots may transmit, receive, measure a strength of, and/or associate the signal strengths with a plurality of finding locations according to the methods described throughout this disclosure. Each finding robot may go left, right, forwards, or backwards (in the x and y axes) at any location on the grid to determine the next finding location of the plurality of finding locations. Alternatively, the finding robots may be communicatively coupled to each other, and each robot may move towards the finding robot which is at a location associated with the strongest measured signal. This may allow a quicker determination of the location of the lost robot 502. In some examples, each finding robot may measure and associate substantially simultaneously (in parallel) to one another. In this case, each robot would only need to measure and associate at a single finding location each for the location of the lost robot 502 to be determined, though this is not essential, and multiple locations for each finding robot may be probed. In this example, each finding robot and/or the lost robot 502 may be configured to communicate the strength values with the control system for determination of the location of the lost robot 502.

The above methods have been described as though the location of the lost robot 502 is unknown in both the X and Y directions. However, it is likely that the location of the lost robot 502 was known shortly before it became unknown, for example, shortly after it was instructed to move. Therefore, in some examples, one of the X or Y locations (coordinates) of the lost robot 502 is known. In this situation, it is possible to logically choose the plurality of finding locations for the finding robot 504 on rails of the rail system which are parallel to the rails in which the lost robot 502 is located. The location associated with the strongest signal would then be perpendicular to the lost robot 502 as would be understood.

In some examples, the first finding location may be located on rails parallel to the known axis of the lost robot 502. The second finding location may also located on rails parallel to the known axis of the lost robot 502 sharing either X or Y values with the first finding location, and also located far enough from the first section such that the distance between them substantially spans the isolation area. The finding robot 504 may move slowly from the first finding location (step 602) to the second finding location (step 606) while transmitting and/or receiving a continuous signal to/from the lost robot 502. The finding robot 504 may move at a known speed, and a signal strength received along a transit from a first finding location to a second finding location is associated with a time of transit, or location of transit. For example, a graph may be plotted of signal strength vs time or location. The relative peak of this graph is associated with a location of transit in which the finding robot 504 is perpendicular to the lost robot 502. This is because the perpendicular distance to the robot is the distance of closest approach to the lost robot 502, meaning that the signal strength is at its highest. The slower the finding robot 504 travels from the first finding location to the second section, the more accurate the determination of the location of the lost robot 502 is.

This example may be used in combination with other described methods of the disclosure. For example, it may be used to more accurately determine the location of the lost robot 502 once one or more measurements have already been taken.

Once the location of the lost robot 502 has been determined by the above methods, the isolation area may be decreased in size. Decreasing the size of the isolation area decreases the size of the inoperable area of the grid. This increases overall system efficiency. Additionally or alternatively, the lost robot 502 can be sent new operating instructions if its operation is not impeded. The finding robot(s) may traverse the periphery of the isolation area when sending/receiving signals between the lost robot 502 in order to systematically reduce the size of the isolation area such that disruption to the automated storage and retrieval system can be reduced. In more detail, the finding robot(s) may move up a side of the isolation area and if the strength of the signal does not exceed a predetermined value, the isolation area may decrease in size in a direction perpendicular to the side of the isolation area probed by the finding robot(s). This may continue on any side of the isolation area until the isolation area is at a desired size (eg. one storage cell).

In some examples, the one or more finding robots may be permitted to enter the isolation area. However, if the signal strength measured at a location within the isolation area exceeds a predetermined value, the finding robot 504 located at that position is configured to move in a direction away from the centre of the isolation area so as to avoid colliding with the lost robot 502.

The signals transmitted and received in the presently disclosed methods may be any suitable frequency for communication. In a non-limiting example, the signals transmitted and received may be radio waves, microwaves, or visible light. Additionally, they may be any suitable type of signal. This may include but is in by no means limited to at least one of a burst signal, a continuous wave signal, an identification check signal, a polling signal, and/or a status signal. The skilled person would be aware that any other suitable type of signal or combination of signals is also possible.

The methods described herein for locating a lost robot 502 may be carried out in-between normal tasks in the automated storage and retrieval system. That is, the one or more finding robots may have been assigned a task related to the normal operation of the storage and retrieval system. The one or more finding robots may postpone this task in order to carry out the methods of this disclosure. Once the lost robot 502 has been located, the one or more finding robots may continue with their previous task. This is not essential, however, and rather the one or more robots may have been idle before carrying out the methods of this disclosure.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method of locating a lost robot on an automated storage and retrieval system, the method comprising:
transmitting and receiving at least one signal between the lost robot and one or
more finding robots located at a plurality of finding locations;
measuring a strength of the at least one signal received;
associating a value for the strength of the at least one signal received with each of the plurality of finding locations respectively; and
determining the location of the lost robot based on the respective values for strength of the at least one signal.

2. The method of claim 1, wherein the lost robot and the one or more finding robots are located on a rail system arranged on top of the automated storage and retrieval system, and wherein the location of the lost robot is known in a first axis of the rail system.

3. The method of any preceding claim, wherein transmitting and receiving the at least one signal between the lost robot and the one or more finding robots comprises transmitting and receiving the at least one signal through at least one channel, and optionally wherein each channel of the at least one channel comprises a different transmission frequency.

4. The method of any preceding claim, wherein the at least one signal comprises at least one of a burst signal, a continuous wave signal, an identification check signal, a polling signal, and/or a status signal.

5. The method of any preceding claim, wherein the one or more finding robots are selected from a larger group of robots operating on the automated storage and retrieval system.

6. The method of claim 6, wherein the one or more finding robots selected from the larger group of robots are the closest in proximity to the lost robot at the time the lost robot first became lost.

7. The method of any preceding claim, wherein the location of the lost robot in a second axis of the rail system is estimated based on information associated with the lost robot, the information comprising at least one of:
a mass of the lost robot,
a velocity of the lost robot before it became lost,
a model of the lost robot, and/or
a location of the lost robot before it became lost.

8. The method of claim 8, wherein a portion of the automated storage and retrieval system is isolated based on the estimated location of the lost robot in the second axis of the automated storage and retrieval system, and optionally, when the location of the lost robot has been determined, decreasing the size of the portion of the automated storage and retrieval system that is isolated.

9. The method of any preceding claim, wherein each location of the plurality of locations are separated by a distance substantially equal to the length of a grid square of the automated storage and retrieval system.

10. The method of any preceding claim wherein the plurality of finding locations are determined sequentially, and optionally wherein a first finding location of the plurality of finding locations is the location of the finding robot when the robot first became lost.

11. The method of claim 11, wherein determining the plurality of finding locations sequentially comprises measuring a strength of the at least one signal received at or sent from
the first finding location of the plurality of finding locations;
associating a value for the strength of the at least one signal received at or sent from the first finding location with the first finding location;
moving a finding robot to a second finding location;
measuring a strength of the at least one signal received at the second finding location of the plurality of finding locations; and
associating a value for the strength of the at least one signal received at the second finding location with the second finding location.

12. The method of claim 12, further comprising comparing the value for strength received at the first finding location with the value for strength of signal received at the second finding location, and if the value for strength of the signal received at the second finding location is larger, moving the finding robot in the same direction as it was moved from the first finding location to the second finding location to a third finding location of the plurality of finding locations.

13. The method of claims 12 or 13, wherein there are at least two finding robots, wherein the first finding location comprises a first plurality of different finding locations, each finding location of the first plurality of finding locations are associated with each robot of the at least two finding robots respectively, and wherein the second finding location comprises a second plurality of different finding locations, each finding location of the second plurality of finding locations are associated with each robot of the at least two finding robots respectively.

14. The method of any preceding claim, further comprising measuring a strength of the at least one signal received while in transit between respective finding locations of the plurality of locations, and optionally, plotting a graph of strength of signal received vs time for each transit between respective finding locations to narrow down the location of the lost robot.

15. The method of any preceding claim, wherein the one or more finding robots postpone a storage and retrieval task before performing the method of any preceding claim, and having performed the method of any preceding claim, the one or more finding robots proceed with the storage and retrieval task.
